# EUROPEAN PATENT APPLICATION

(11) **EP 4 648 245 A1**
(43) Date of publication of application: **12.11.2025**
(21) Application number: 25166175.7
(22) Date of filing: 25.03.2025
(51) Int. Cl.: H02J 1/08, H02J 1/10, B64C 29/00

(54) **POWER SUPPLY SYSTEM, MOVING OBJECT, AND METHOD OF CONTROLLING POWER SUPPLY SYSTEM**

(30) Priority: 28.03.2024 JP 2024054372
(71) Applicant: HONDA MOTOR CO., LTD., Tokyo 105-8404 (JP)
(72) Inventor: ASARI, Norihiro, Saitama, 351-0193 (JP); NOGUCHI, Kenji, Saitama, 351-0193 (JP)
(74) Representative: Weickmann & Weickmann PartmbB

(57) **Abstract**

A electrical power supply system (10) is equipped with a first electrical power supply circuit (12a), a second electrical power supply circuit (12b), a connection circuit (18a) including a connection device (20a) capable of connecting the first electrical power supply circuit and the second electrical power supply circuit to each other, a control device (34), and a disconnection device (22a). The connection circuit also includes a reactor (23a) connected in series to the connection device. In a case that a failure has occurred in the supply of electrical power from a first electrical power generating device (14a) to the first electrical power supply circuit (12a), the control device executes a connection control on the connection device in a state in which the first electrical power supply circuit and the connection circuit are disconnected from the first electrical power generating device by the disconnection device.

## Description

### BACKGROUND OF THE INVENTION

### FIELD OF THE INVENTION

The present disclosure relates to an electrical power supply system, a moving object, and a method of controlling an electrical power supply system.

### DESCRIPTION OF THE RELATED ART

In recent years, research and development have been conducted on electrification technologies that contribute to energy efficiency in order to ensure that more people have access to affordable, reliable, sustainable and modern energy.

In JP 2022-529997 A, an aircraft electrical energy supply network (electrical power supply system) is disclosed.

### SUMMARY OF THE INVENTION

There is a demand for a more satisfactory electrical power supply system, a more satisfactory moving object, and a method of more satisfactorily controlling such an electrical power supply system.

The present invention has the object of solving the aforementioned problem.

A first aspect of the present disclosure is characterized by an electrical power supply system including a first electrical power supply circuit configured to supply to a first load device an electrical power output from a first electrical power generating device, the electrical power being a direct current electrical power, a second electrical power supply circuit configured to supply to a second load device an electrical power output from a second electrical power generating device, the electrical power being a direct current electrical power, a connection circuit equipped with a connection device configured to connect the first electrical power supply circuit and the second electrical power supply circuit to each other, and a control device configured to execute a connection control on the connection device in order to connect the first electrical power supply circuit and the second electrical power supply circuit to each other via the connection circuit, and a disconnection device configured to disconnect the first electrical power generating device from the first electrical power supply circuit and the connection circuit, wherein the connection circuit is further equipped with a reactor configured to be connected in series to the connection device, and in a case that a failure has occurred in supply of the electrical power from the first electrical power generating device to the first electrical power supply circuit, the control device executes the connection control on the connection device in a state in which the first electrical power supply circuit and the connection circuit are disconnected from the first electrical power generating device by the disconnection device.

A second aspect of the present disclosure is characterized by a moving object including the electrical power supply system according to the first aspect.

A third aspect of the present disclosure is characterized by a method of controlling an electrical power supply system, the electrical power supply system including a first electrical power supply circuit configured to supply to a first load device an electrical power output from a first electrical power generating device, the electrical power being a direct current electrical power, a second electrical power supply circuit configured to supply to a second load device an electrical power output from a second electrical power generating device, the electrical power being a direct current electrical power, a connection circuit equipped with a connection device configured to connect the first electrical power supply circuit and the second electrical power supply circuit to each other, and a disconnection device configured to disconnect the first electrical power generating device from the first electrical power supply circuit and the connection circuit, the connection circuit being further equipped with a reactor configured to be connected in series to the connection device, the method including in a case that a failure has occurred in supply of the electrical power from the first electrical power generating device to the first electrical power supply circuit, executing a connection control on the connection device in order to connect the first electrical power supply circuit and the second electrical power supply circuit to each other via the connection circuit in a state in which the first electrical power supply circuit and the connection circuit are disconnected from the first electrical power generating device by the disconnection device.

According to the present disclosure, it is possible to provide a more satisfactory electrical power supply system, a more satisfactory moving object, and a method of more satisfactorily controlling such an electrical power supply system.

The above and other objects, features, and advantages of the present invention will become more apparent from the following description when taken in conjunction with the accompanying drawings, in which a preferred embodiment of the present invention is shown by way of illustrative example.

### BRIEF DESCRIPTION OF THE DRAWINGS

FIG. 1 is a schematic diagram of the electrical power supply system according to an embodiment;
FIG. 2 is a schematic diagram of a first electrical power generating device;
FIG. 3 is a schematic diagram illustrating the configuration of a reverse current prevention device;
FIG. 4 is a control block diagram of a control device;
FIG. 5 is a diagram illustrating operations of the electrical power supply system when operating normally;
FIG. 6 is a flowchart for explaining an example of a control method of the electrical power supply system according to the embodiment;
FIG. 7 is a diagram illustrating operations of the electrical power supply system when operating abnormally;
FIG. 8 is a diagram illustrating operations of the electrical power supply system when operating abnormally;
FIG. 9 is a diagram illustrating operations of the electrical power supply system when operating abnormally;
FIG. 10 is a diagram illustrating operations of the electrical power supply system when operating abnormally;
FIG. 11 is a diagram illustrating a state in which outputs of a first electrical power generator are short-circuited; and
FIG. 12 is a schematic diagram of a moving object.

### DETAILED DESCRIPTION OF THE INVENTION

An electrical power supply system is provided with, for example, a first electrical power supply circuit for supplying DC electrical power output from a first electrical power generating device to a first load device, and a second electrical power supply circuit for supplying DC electrical power output from a second electrical power generating device to a second load device. Also, the electrical power supply system includes a connection circuit equipped with a connection device that is capable of connecting the first electrical power supply circuit and the second electrical power supply circuit. In this case, when connection control for connecting the first electrical power supply circuit and the second electrical power supply circuit to each other via the connection circuit is performed, an inrush current flows from one electrical power supply circuit to the other electrical power supply circuit. That is, an inrush current flows in the first electrical power supply circuit or the second electrical power supply circuit. In this case, there is a concern that the electronic devices provided in the first electrical power supply circuit or the second electrical power supply circuit may be damaged by the inrush current. The present disclosure may provide an electrical power supply system, a moving object, and a method of controlling the electrical power supply system capable of suppressing damage to an electronic device due to an inrush current.

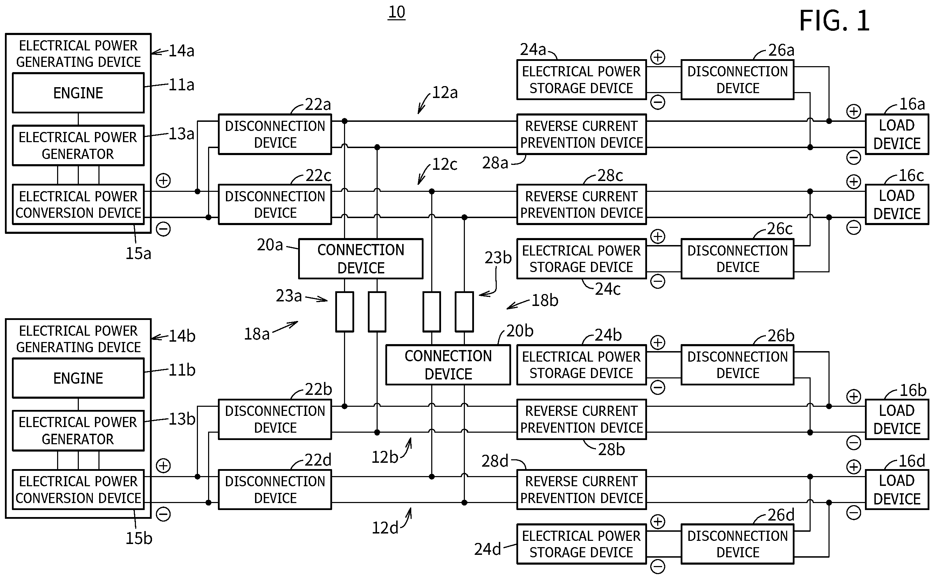

FIG. 1 is a schematic diagram of an electrical power supply system 10 according to the present embodiment. As shown in FIG. 1, the electrical power supply system 10 includes a first electrical power supply circuit 12a, a second electrical power supply circuit 12b, a third electrical power supply circuit 12c, and a fourth electrical power supply circuit 12d.

The first electrical power supply circuit 12a supplies DC electrical power output from a first electrical power generating device 14a to a first load device 16a. The second electrical power supply circuit 12b supplies DC electrical power output from a second electrical power generating device 14b to a second load device 16b. The third electrical power supply circuit 12c supplies the DC electrical power output from the first electrical power generating device 14a to a third load device 16c. The fourth electrical power supply circuit 12d supplies the DC electrical power output from the second electrical power generating device 14b to a fourth load device 16d.

The first electrical power generating device 14a includes a first engine 11a, a first electrical power generator 13a, and a first electrical power conversion device 15a. The second electrical power generating device 14b includes a second engine 11b, a second electrical power generator 13b, and a second electrical power conversion device 15b. The first engine 11a and the second engine 11b are, for example, gas turbine engines. The first engine 11a and the second engine 11b may be other engines such as reciprocating engines. The first electrical power generator 13a is driven by the first engine 11a and generates three-phase AC electrical power. The first electrical power conversion device 15a converts the three-phase AC electrical power output from the first electrical power generator 13a into DC electrical power. The second electrical power generator 13b is driven by the second engine 11b and generates three-phase AC electrical power. The second electrical power conversion device 15b converts the three-phase AC electrical power output from the second electrical power generator 13b into DC electrical power.

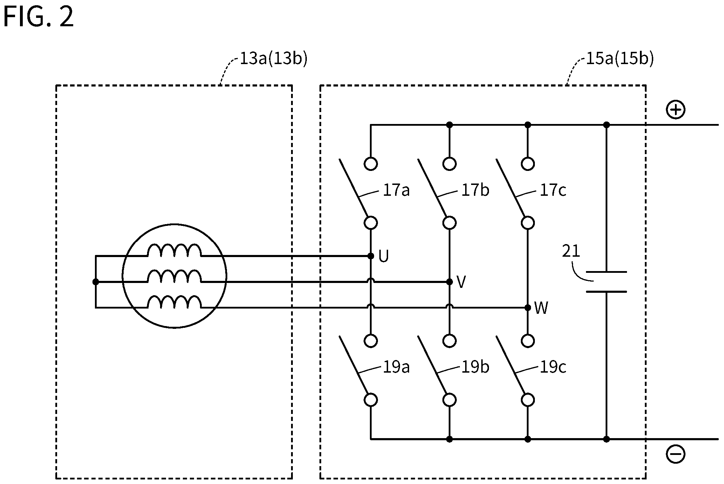

FIG. 2 is a schematic diagram of the first electrical power generating device 14a according to the present embodiment. The configuration of the second electrical power generating device 14b is the same as that of the first electrical power generating device 14a. As shown in FIG. 2, the first electrical power conversion device 15a of the first electrical power generating device 14a includes switching elements 17a to 17c of the upper arm, switching elements 19a to 19c of the lower arm, and a smoothing capacitor 21.

Each of the switching elements 17a to 17c and the switching elements 19a to 19c is a semiconductor switch such as a MOSFET (Metal Oxide Semiconductor Field Effect Transistor) and an IGBT (Insulated Gate Bipolar Transistor). A freewheeling diode may be provided in parallel with each of the switching elements 17a to 17c and the switching elements 19a to 19c.

In the first electrical power conversion device 15a, the three-phase AC electrical power output from the first electrical power generator 13a is rectified and converted into DC electrical power by controlling the timing of turning on and off of the switching elements 17a to 17c and the switching elements 19a to 19c. The voltage fluctuation of the rectified DC electrical power is suppressed by the smoothing capacitor 21, and the DC electrical power having a stable voltage is output from the first electrical power conversion device 15a. In the case that the first electrical power generator 13a is started, the smoothing capacitor 21 needs to be charged in advance.

The first electrical power conversion device 15a and the second electrical power conversion device 15b may also include various sensors such as a voltage sensor and a current sensor, and various elements such as fuses, relays, breakers, diodes, transistors, resistors, coils, capacitors, or the like.

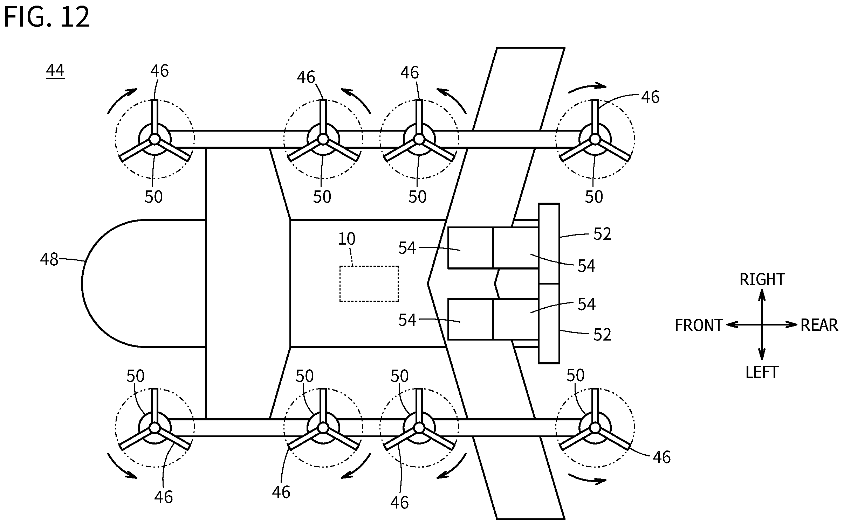

As shown in FIG. 1, each of the first load device 16a, the second load device 16b, the third load device 16c, and the fourth load device 16d have, for example, unillustrated inverters and electric motors 50 and 54 (see FIG. 12). The inverter converts an input DC electrical power into three-phase AC electrical power, and the electric motors 50 and 54 are driven by the three-phase AC electrical power. Each of the first load device 16a, the second load device 16b, the third load device 16c, and the fourth load device 16d may include a DC/DC converter and a low voltage drive device, neither of which is illustrated. The DC/DC converter causes the voltage of the input DC electrical power to be lowered, and the low voltage drive device is driven by the DC electrical power.

The first load device 16a, the second load device 16b, the third load device 16c, and the fourth load device 16d may also include various sensors such as voltage sensors and current sensors or the like, and various elements such as fuses, relays, breakers, diodes, transistors, resistors, coils, capacitors, or the like. A plurality of the first load devices 16a may be connected in parallel to the first electrical power supply circuit 12a. A plurality of the second load devices 16b may be connected in parallel to the second electrical power supply circuit 12b. A plurality of the third load devices 16c may be connected in parallel to the third electrical power supply circuit 12c. A plurality of the fourth load devices 16d may be connected in parallel to the fourth electrical power supply circuit 12d.

The electrical power supply system 10 is equipped with a connection circuit 18a and a connection circuit 18b. The connection circuit 18a includes a connection device 20a and reactors 23a. The connection circuit 18b includes a connection device 20b and reactors 23b.

The connection device 20a is capable of connecting the first electrical power supply circuit 12a and the second electrical power supply circuit 12b. The connection device 20a switches between a state in which the first electrical power supply circuit 12a and the second electrical power supply circuit 12b are connected and a state in which the first electrical power supply circuit 12a and the second electrical power supply circuit 12b are disconnected, by a contactor (not shown). Each of the reactors 23a is connected in series to the connection device 20a. The reactor 23a is provided on each of the positive and negative power lines of the connection circuit 18a.

In a similar manner, the connection device 20b is capable of connecting the third electrical power supply circuit 12c and the fourth electrical power supply circuit 12d. The connection device 20b switches between a state in which the third electrical power supply circuit 12c and the fourth electrical power supply circuit 12d are connected and a state in which the third electrical power supply circuit 12c and the fourth electrical power supply circuit 12d are disconnected, by a contactor (not shown). The reactors 23b are connected in series to the connection device 20b. The reactor 23b is provided on each of the positive and negative power lines of the connection circuit 18b.

Each of the connection device 20a and the connection device 20b may include a relay instead of the contactor. Each of the connection device 20a and the connection device 20b may include a breaker instead of the contactor. Each of the connection device 20a and the connection device 20b may include a semiconductor switch instead of the contactor. The reactors 23a and the reactors 23b may be air-core reactors or iron-core reactors. Each of the reactors 23a and 23b is an inductor (a passive electrical component) in which an electrical wire is wound in a coil shape. When an electrical current flows through each of the coils of the reactors 23a and 23b, a magnetic field (counter-electromotive force) is generated in the coil, and the magnetic field (counter-electromotive force) prevents the current from flowing.

Normally, the first electrical power supply circuit 12a and the second electrical power supply circuit 12b are disconnected. Consequently, in the case that an abnormality has occurred in one of the first electrical power supply circuit 12a or the second electrical power supply circuit 12b, it is possible to prevent the abnormality from adversely influencing the other. For example, when an overcurrent occurs in one of the first electrical power supply circuit 12a or the second electrical power supply circuit 12b, the overcurrent is prevented from flowing to the other.

Similarly, the third electrical power supply circuit 12c and the fourth electrical power supply circuit 12d are normally disconnected. Consequently, in the case that an abnormality has occurred in one of the third electrical power supply circuit 12c or the fourth electrical power supply circuit 12d, it is possible to prevent the abnormality from adversely influencing the other. For example, when an overcurrent occurs in one of the third electrical power supply circuit 12c or the fourth electrical power supply circuit 12d, the overcurrent is prevented from flowing to the other.

In the case that a failure has occurred in the supply of electrical power from the first electrical power generating device 14a to the first electrical power supply circuit 12a, the first electrical power supply circuit 12a and the second electrical power supply circuit 12b are connected by the connection device 20a. In accordance with this feature, the electrical power is supplied from the second electrical power supply circuit 12b to the first electrical power supply circuit 12a. As mentioned above, the connection circuit 18a for connecting the first electrical power supply circuit 12a and the second electrical power supply circuit 12b is equipped with the connection device 20a and the reactors 23a. The reactors 23a are connected in series to the connection device 20a as described above. When the supply of electric power from the second electrical power supply circuit 12b to the first electrical power supply circuit 12a is started, a counter-electromotive force is generated in each of the reactors 23a, and therefore a peak value of the inrush current flowing from the second electrical power supply circuit 12b to the first electrical power supply circuit 12a is suppressed to be low. In accordance with this feature, electronic devices provided in the first electrical power supply circuit 12a can be protected.

In the case that a failure has occurred in the supply of electrical power from the first electrical power generating device 14a to the third electrical power supply circuit 12c, the third electrical power supply circuit 12c and the fourth electrical power supply circuit 12d are connected by the connection device 20b. In accordance with this feature, the electrical power is supplied from the fourth electrical power supply circuit 12d to the third electrical power supply circuit 12c. As mentioned above, the connection circuit 18b for connecting the third electrical power supply circuit 12c and the fourth electrical power supply circuit 12d is equipped with the connection device 20b and the reactors 23b. Each of the reactors 23b are connected in series to the connection device 20b as described above. When the supply of electrical power from the fourth electrical power supply circuit 12d to the third electrical power supply circuit 12c is started, a counter-electromotive force is generated in the reactor 23b, and therefore a peak value of the inrush current flowing from the fourth electrical power supply circuit 12d to the third electrical power supply circuit 12c is suppressed to be low. In accordance with this feature, electronic devices provided in the third electrical power supply circuit 12c can be protected.

In the case that a failure has occurred in the supply of electrical power from the second electrical power generating device 14b to the second electrical power supply circuit 12b, the first electrical power supply circuit 12a and the second electrical power supply circuit 12b are connected by the connection device 20a. In accordance with this feature, the electrical power is supplied from the first electrical power supply circuit 12a to the second electrical power supply circuit 12b. When the supply of electric power from the first electrical power supply circuit 12a to the second electrical power supply circuit 12b is started, a counter-electromotive force is generated in each of the reactors 23a, and therefore a peak value of the inrush current flowing from the first electrical power supply circuit 12a to the second electrical power supply circuit 12b is suppressed to be low. In accordance with this feature, electronic devices provided in the second electrical power supply circuit 12b can be protected.

In the case that a failure has occurred in the supply of electrical power from the second electrical power generating device 14b to the fourth electrical power supply circuit 12d, the third electrical power supply circuit 12c and the fourth electrical power supply circuit 12d are connected by the connection device 20b. In accordance with this feature, the electrical power is supplied from the third electrical power supply circuit 12c to the fourth electrical power supply circuit 12d. When the supply of electric power from the third electrical power supply circuit 12c to the fourth electrical power supply circuit 12d is started, a counter-electromotive force is generated in each of the reactors 23b, and therefore a peak value of the inrush current flowing from the third electrical power supply circuit 12c to the fourth electrical power supply circuit 12d is suppressed to be low. In accordance with this feature, electronic devices provided in the fourth electrical power supply circuit 12d can be protected.

The electrical power supply system 10 is equipped with disconnection devices 22a to 22d. The disconnection device 22a is capable of disconnecting the first electrical power generating device 14a from the first electrical power supply circuit 12a and the connection circuit 18a. The disconnection device 22b is capable of disconnecting the second electrical power generating device 14b from the second electrical power supply circuit 12b and the connection circuit 18a. The disconnection device 22c is capable of disconnecting the first electrical power generating device 14a from the third electrical power supply circuit 12c and the connection circuit 18b. The disconnection device 22d is capable of disconnecting the second electrical power generating device 14b from the fourth electrical power supply circuit 12d and the connection circuit 18b.

The disconnection device 22a switches between a state in which the first electrical power generating device 14a is disconnected from the first electrical power supply circuit 12a and the connection circuit 18a and a state in which the first electrical power generating device 14a is connected to the first electrical power supply circuit 12a and the connection circuit 18a, by a contactor (not shown). Similarly, the disconnection device 22b switches between a state in which the second electrical power generating device 14b is disconnected from the second electrical power supply circuit 12b and the connection circuit 18a and a state in which the second electrical power generating device 14b is connected to the second electrical power supply circuit 12b and the connection circuit 18a, by a contactor (not shown).

Further, the disconnection device 22c switches between a state in which the first electrical power generating device 14a is disconnected from the third electrical power supply circuit 12c and the connection circuit 18b and a state in which the first electrical power generating device 14a is connected to the third electrical power supply circuit 12c and the connection circuit 18b, by a contactor (not shown). Similarly, the disconnection device 22d switches between a state in which the second electrical power generating device 14b is disconnected from the fourth electrical power supply circuit 12d and the connection circuit 18b and a state in which the second electrical power generating device 14b is connected to the fourth electrical power supply circuit 12d and the connection circuit 18b, by a contactor (not shown).

The disconnection devices 22a to 22d may include relays instead of contactors. The disconnection devices 22a to 22d may include breakers instead of the contactors. The disconnection devices 22a to 22d may include semiconductor switches instead of the contactors.

The electrical power supply system 10 is provided with a first electrical power storage device 24a, a second electrical power storage device 24b, a third electrical power storage device 24c, and a fourth electrical power storage device 24d. The first electrical power storage device 24a is connected to the first electrical power supply circuit 12a, in parallel with the first electrical power generating device 14a. The second electrical power storage device 24b is connected to the second electrical power supply circuit 12b, in parallel with the second electrical power generating device 14b. The third electrical power storage device 24c is connected to the third electrical power supply circuit 12c, in parallel with the first electrical power generating device 14a. The fourth electrical power storage device 24d is connected to the fourth electrical power supply circuit 12d, in parallel with the second electrical power generating device 14b.

The first electrical power storage device 24a, the second electrical power storage device 24b, the third electrical power storage device 24c, and the fourth electrical power storage device 24d each include a lithium ion battery. The first electrical power storage device 24a, the second electrical power storage device 24b, the third electrical power storage device 24c, and the fourth electrical power storage device 24d may each include a secondary battery other than a lithium ion battery. The first electrical power storage device 24a, the second electrical power storage device 24b, the third electrical power storage device 24c, and the fourth electrical power storage device 24d may each include a large-capacity capacitor.

The first electrical power storage device 24a, the second electrical power storage device 24b, the third electrical power storage device 24c, and the fourth electrical power storage device 24d may also include various sensors such as voltage sensors and current sensors or the like, and various elements such as fuses, relays, breakers, diodes, transistors, resistors, coils, capacitors, or the like.

The electrical power supply system 10 is equipped with disconnection devices 26a to 26d. The disconnection device 26a is capable of disconnecting the first electrical power storage device 24a from the first electrical power supply circuit 12a and the first load device 16a. The disconnection device 26b is capable of disconnecting the second electrical power storage device 24b from the second electrical power supply circuit 12b and the second load device 16b. The disconnection device 26c is capable of disconnecting the third electrical power storage device 24c from the third electrical power supply circuit 12c and the third load device 16c. The disconnection device 26d is capable of disconnecting the fourth electrical power storage device 24d from the fourth electrical power supply circuit 12d and the fourth load device 16d.

The disconnection device 26a switches between a state in which the first electrical power storage device 24a is disconnected from the first electrical power supply circuit 12a and the first load device 16a and a state in which the first electrical power storage device 24a is connected to the first electrical power supply circuit 12a and the first load device 16a, by a contactor (not shown). Similarly, the disconnection device 26b switches between a state in which the second electrical power storage device 24b is disconnected from the second electrical power supply circuit 12b and the second load device 16b and a state in which the second electrical power storage device 24b is connected to the second electrical power supply circuit 12b and the second load device 16b, by a contactor (not shown).

The disconnection device 26c switches between a state in which the third electrical power storage device 24c is disconnected from the third electrical power supply circuit 12c and the third load device 16c and a state in which the third electrical power storage device 24c is connected to the third electrical power supply circuit 12c and the third load device 16c, by a contactor (not shown). Similarly, the disconnection device 26d switches between a state in which the fourth electrical power storage device 24d is disconnected from the fourth electrical power supply circuit 12d and the fourth load device 16d and a state in which the fourth electrical power storage device 24d is connected to the fourth electrical power supply circuit 12d and the fourth load device 16d, by a contactor (not shown).

The disconnection devices 26a to 26d may include relays instead of contactors. The disconnection devices 26a to 26d may include breakers instead of the contactor. The disconnection devices 26a to 26d may include semiconductor switches instead of the contactors.

The electrical power supply system 10 is equipped with reverse current prevention devices 28a to 28d. The reverse current prevention device 28a restricts the supply of electrical power from the first electrical power storage device 24a to the first electrical power supply circuit 12a. The reverse current prevention device 28b restricts the supply of electrical power from the second electrical power storage device 24b to the second electrical power supply circuit 12b. The reverse current prevention device 28c restricts the supply of electrical power from the third electrical power storage device 24c to the third electrical power supply circuit 12c. The reverse current prevention device 28d restricts the supply of electrical power from the fourth electrical power storage device 24d to the fourth electrical power supply circuit 12d.

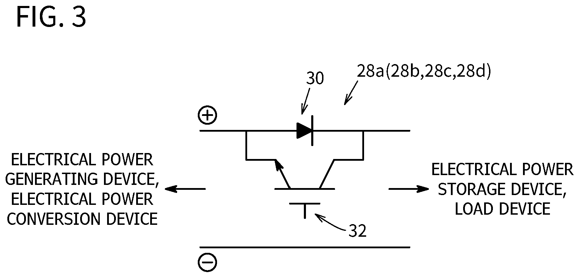

FIG. 3 is a schematic diagram illustrating a configuration of the reverse current prevention device 28a according to the present embodiment. As shown in FIG. 3, the configurations of the reverse current prevention devices 28b to 28d are the same as those of the reverse current prevention device 28a. The reverse current prevention device 28a includes a diode 30 and a transistor 32.

The diode 30 is provided in the wiring of the positive electrode. In the case that the voltage of the anode is lower than the voltage of the cathode, the diode 30 conducts little current. In the case that the voltage of the anode is higher than the voltage of the cathode and the potential difference between the cathode and the anode is equal to or higher than the forward voltage, the diode 30 causes a current to flow. As a result, electrical power is supplied from the first electrical power supply circuit 12a to the first load device 16a and the first electrical power storage device 24a via the diode 30. On the other hand, no electrical power is supplied from the first load device 16a and the first electrical power storage device 24a to the first electrical power supply circuit 12a via the diode 30.

The transistor 32 is provided bypassing the diode 30. When a current flows from the base to the emitter of the transistor 32, a current flows from the collector to the emitter. As a result, electrical power is supplied from the first electrical power storage device 24a to the first electrical power supply circuit 12a via the transistor 32. In the case that the electrical power is not supplied from the first electrical power storage device 24a to the first electrical power supply circuit 12a, the transistor 32 may be omitted. Instead of the transistor 32, another switching element may be used, or a contactor may be used.

The diode 30 may be provided in the wiring of the negative electrode. The diode 30 may be provided in both the positive electrode wiring and the negative electrode wiring.

The electrical power supply system 10 may include various sensors such as voltage sensors and current sensors, and elements such as fuses, resistors, coils, and capacitors, in addition to the above-described elements.

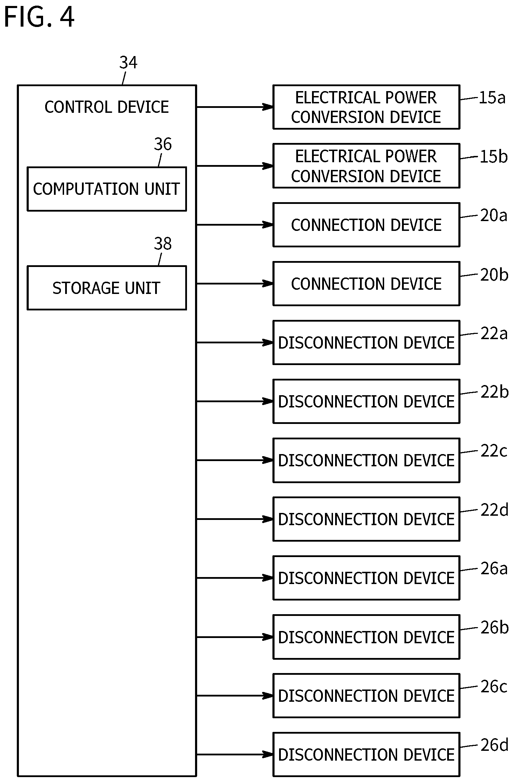

FIG. 4 is a control block diagram of a control device 34 according to the present embodiment. As shown in FIG. 4, the electrical power supply system 10 is equipped with the control device 34. The control device 34 controls the first electrical power conversion device 15a, the second electrical power conversion device 15b, the connection device 20a, the connection device 20b, the disconnection devices 22a to 22d, and the disconnection devices 26a to 26d. The control device 34 may control the connection device 20a, the connection device 20b, the disconnection devices 22a to 22d, and the disconnection devices 26a to 26d, and a control device other than the control device 34 may control the first electrical power conversion device 15a and the second electrical power conversion device 15b. The control device 34 also may be configured by a plurality of control units (ECU: electronic control unit). In this case, for example, the control device 34 may include a control unit for controlling the disconnection device 22a of the first electrical power supply circuit 12a and a control unit for controlling the disconnection device 22b of the second electrical power supply circuit 12b.

The control device 34 includes a computation unit 36 and a storage unit 38. The computation unit 36 is a processor such as a CPU (Central Processing Unit) or a GPU (Graphics Processing Unit) or the like. The computation unit 36 controls each of the devices by executing a program that is stored in the storage unit 38. At least part of the computation unit 36 may be realized by an integrated circuit such as an ASIC (Application Specific Integrated Circuit) or an FPGA (Field-Programmable Gate Array) or the like. At least part of the computation unit 36 may be realized by an electronic circuit including a discrete device.

The storage unit 38 is made up of a volatile memory (not illustrated) and a non-volatile memory (not illustrated), each of which is a computer-readable storage medium. The volatile memory, for example, is a RAM (Random Access Memory) or the like. The non-volatile memory, for example, is a ROM (Read Only Memory), a flash memory, or the like. Data and the like are stored in, for example, the volatile memory. Programs, tables, maps, and the like are stored, for example, in the non-volatile memory. At least part of the storage unit 38 may be included in the processor, the integrated circuit, or the like described above.

FIG. 12 is a schematic diagram of a moving object 44. As shown in FIG. 12, the electrical power supply system 10 is mounted on the moving object 44.

The moving object 44 of the present embodiment is an electric vertical takeoff and landing aircraft (eVTOL aircraft). The moving object 44 is equipped with eight VTOL rotors 46. The VTOL rotors 46 generate an upwardly directed thrust with respect to a fuselage 48. The moving object 44 is equipped with eight electric motors 50. One of the electric motors 50 drives one of the VTOL rotors 46. The moving object 44 includes two cruise rotors 52. The cruise rotors 52 generate a forwardly directed thrust with respect to the fuselage 48. The moving object 44 is equipped with four electric motors 54. Two of the electric motors 54 drive one of the cruise rotors 52.

Each of the first load device 16a, the second load device 16b, the third load device 16c, and the fourth load device 16d may be equipped with two of the electric motors 50 and one of the electric motors 54. Each of the first load device 16a, the second load device 16b, the third load device 16c, and the fourth load device 16d may include a low voltage drive device in addition to the electric motors 50 and the electric motor 54.

The moving object 44 is not limited to being an aircraft, but may be a ship, an automobile, a train, or the like.

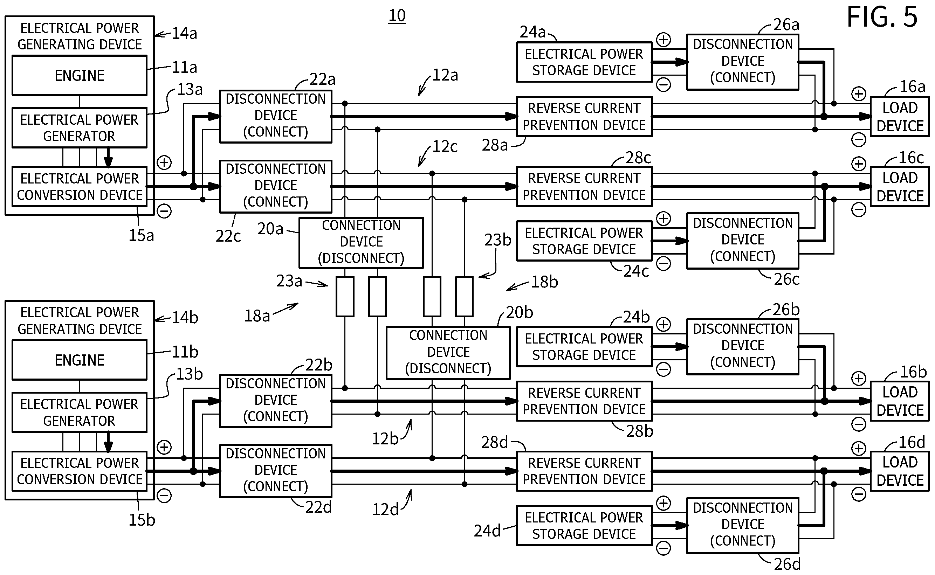

FIG. 5 is a diagram illustrating operations of the electrical power supply system 10 of the present embodiment when operating normally. The arrows shown in FIG. 5 indicate electrical power supply pathways.

As shown in FIG. 5, the first electrical power generating device 14a is connected to the first electrical power supply circuit 12a by the disconnection device 22a, and the first electrical power generating device 14a is connected to the third electrical power supply circuit 12c by the disconnection device 22c. As a result, the three-phase AC electrical power output from the first electrical power generator 13a is converted into DC electrical power by the first electrical power conversion device 15a, and the DC electrical power is supplied to the first load device 16a and the third load device 16c.

The second electrical power generating device 14b is connected to the second electrical power supply circuit 12b by the disconnection device 22b, and the second electrical power generating device 14b is connected to the fourth electrical power supply circuit 12d by the disconnection device 22d. As a result, the three-phase AC electrical power output from the second electrical power generator 13b is converted into DC electrical power in the second electrical power conversion device 15b, and supplied to the second load device 16b and the fourth load device 16d.

The first electrical power storage device 24a is connected to the first load device 16a by the disconnection device 26a. As a result, the DC electrical power output from the first electrical power storage device 24a is supplied to the first load device 16a. The second electrical power storage device 24b is connected to the second load device 16b by the disconnection device 26b. As a result, the DC electrical power output from the second electrical power storage device 24b is supplied to the second load device 16b. The third electrical power storage device 24c is connected to the third load device 16c by the disconnection device 26c. As a result, the DC electrical power output from the third electrical power storage device 24c is supplied to the third load device 16c. The fourth electrical power storage device 24d is connected to the fourth load device 16d by the disconnection device 26d. As a result, the DC electrical power output from the fourth electrical power storage device 24d is supplied to the fourth load device 16d.

Normally, the first electrical power supply circuit 12a and the second electrical power supply circuit 12b are disconnected by the connection device 20a, and the third electrical power supply circuit 12c and the fourth electrical power supply circuit 12d are disconnected by the connection device 20b.

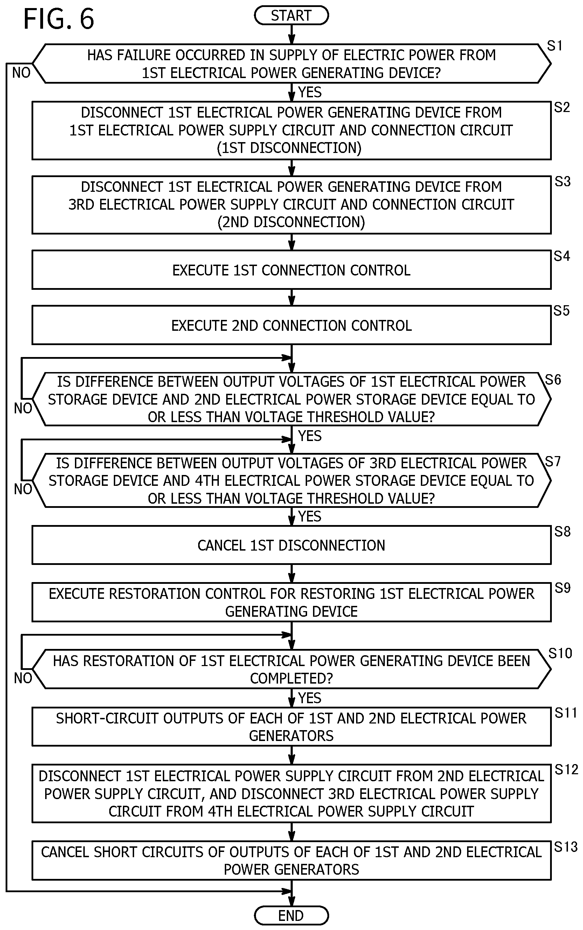

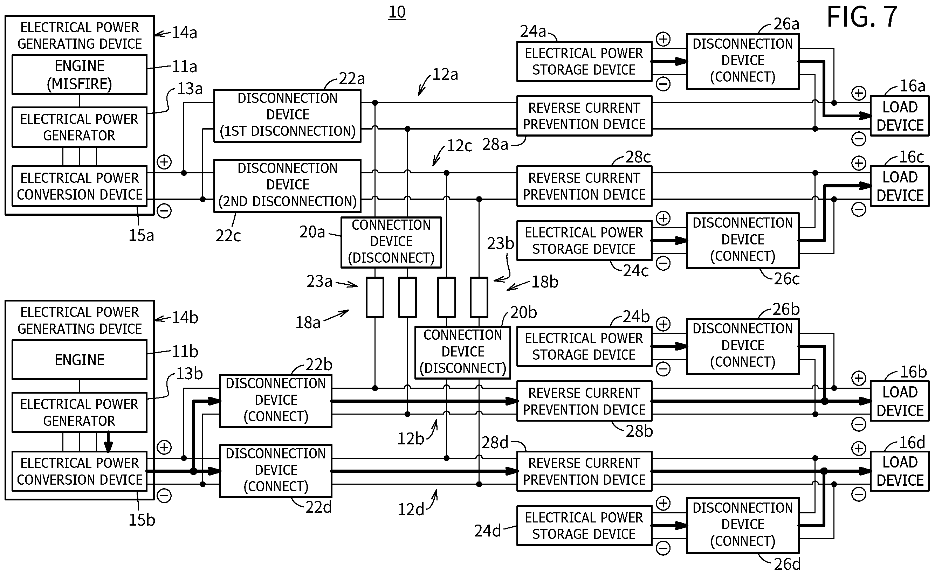

FIG. 6 is a flowchart illustrating an example of a control method of the electrical power supply system 10 according to the embodiment. The process of FIG. 6 is executed at a predetermined cycle. FIGS. 7 to 10 are diagrams illustrating operations of the electrical power supply system 10 when operating abnormally. The arrows shown in FIGS. 7 to 10 indicate electrical power supply pathways.

Here, a case that a failure occurs in the supply of electric power from the first electrical power generating device 14a to the first electrical power supply circuit 12a and the third electrical power supply circuit 12c when the moving object 44, which is an electric vertical take-off and landing aircraft, ascends while flying forward to transition to cruise flight, will be described as an example. Hereinafter, the movement of the moving object 44 ascending while flying forward to transition to the cruise flight may be simply referred to as the ascending of the moving object 44. More specifically, a case that the first engine 11a has misfired while the moving object 44 is ascending will be described as an example. In this case, it is necessary to restart the first engine 11a to maintain the ascent of the moving object 44.

In step S1, the control device 34 determines whether or not a failure has occurred in the supply of electric power from the first electrical power generating device 14a to the first electrical power supply circuit 12a and the third electrical power supply circuit 12c. The control device 34 determines that the failure has occurred, for example, in the case that the supply of electric power from the first electrical power generating device 14a to the first electrical power supply circuit 12a and the third electrical power supply circuit 12c is cut off. The control device 34 may also determine that the failure has occurred, for example, in the case that the electrical power supplied from the first electrical power generating device 14a to the first electrical power supply circuit 12a and the third electrical power supply circuit 12c is lower than a target electrical power. For example, in the case of detecting an abnormality in at least one of the first engine 11a or the first electrical power generator 13a, the control device 34 may determine that a failure has occurred in the supply of electric power from the first electrical power generating device 14a to the first electrical power supply circuit 12a and the third electrical power supply circuit 12c. The control device 34 may detect an abnormality in at least one of the first engine 11a or the first electrical power generator 13a in a case that the output of the first electrical power generator 13a is lower than a target output, a case that the rotational speed of the first electrical power generator 13a is lower than a target rotational speed, a case that the amount of electrical current output from the first electrical power generator 13a is lower than a target amount of electrical current, or the like. In the present embodiment, the control device 34 determines whether or not the first engine 11a has misfired. The control device 34 may determine whether or not the first engine 11a has misfired based on a signal output from a current sensor (not shown) provided in the first electrical power supply circuit 12a. The control device 34 may also determine whether or not the first engine 11a has misfired based on a signal output from the first electrical power conversion device 15a.

In the case it is determined that no failure has occurred in the supply of electric power from the first electrical power generating device 14a to the first electrical power supply circuit 12a and the third electrical power supply circuit 12c (NO in step S1), the process of FIG. 6 is completed.

In the case it is determined that a failure has occurred in the supply of electric power from the first electrical power generating device 14a to the first electrical power supply circuit 12a and the third electrical power supply circuit 12c (YES in step S1), the process transitions to step S2.

In step S2, the control device 34 controls the disconnection device 22a to disconnect the first electrical power generating device 14a from the first electrical power supply circuit 12a and the connection circuit 18a. Hereinafter, this disconnection may be referred to as "first disconnection". As shown in FIG. 7, when the first disconnection is executed, the supply of electrical power from the first electrical power generating device 14a to the first load device 16a is cut off. In this case, only the DC electrical power output from the first electrical power storage device 24a is supplied to the first load device 16a. Therefore, the output voltage and the SOC of the first electrical power storage device 24a are likely to be lowered. That is, the output voltage and SOC of the first electrical power storage device 24a may be lower than the output voltage and SOC of the second electrical power storage device 24b. In addition, the electrical charge of the smoothing capacitor 21 of the first electrical power conversion device 15a is discharged. Thereafter, the process transitions to step S3.

In step S3, the control device 34 controls the disconnection device 22c to disconnect the first electrical power generating device 14a from the third electrical power supply circuit 12c and the connection circuit 18b. This disconnection may be referred to as "second disconnection". As shown in FIG. 7, when the second disconnection is executed, the supply of electrical power from the first electrical power generating device 14a to the third load device 16c is cut off. In this case, only the DC electrical power output from the third electrical power storage device 24c is supplied to the third load device 16c. Therefore, the output voltage and SOC of the third electrical power storage device 24c are likely to be lowered. That is, the output voltage and SOC of the third electrical power storage device 24c may be lower than the output voltage and SOC of the fourth electrical power storage device 24d. Step S3 may be performed at the same time as step S2 or before step S2. After steps S2 and S3, the process transitions to step S4.

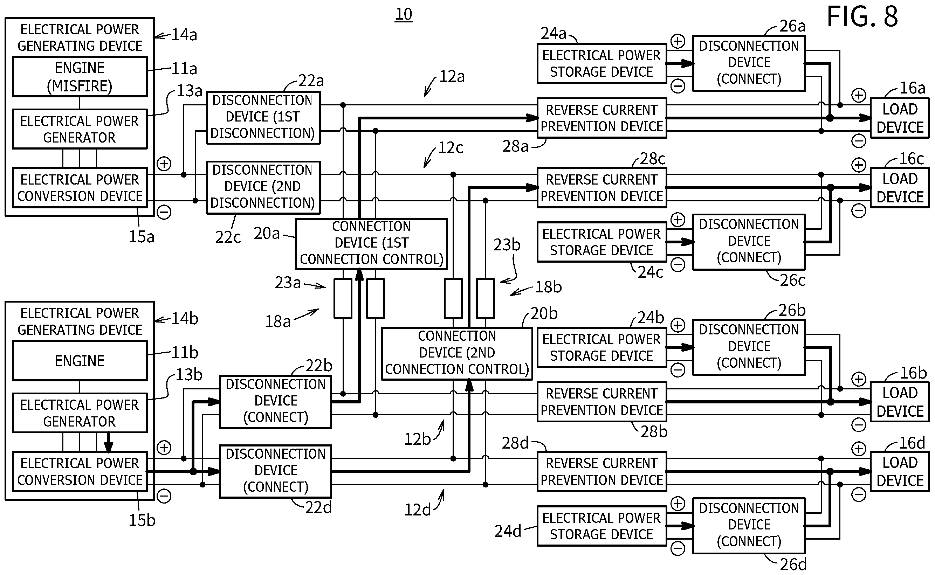

In step S4, the control device 34 executes a first connection control on the connection device 20a. In accordance with this control, as shown in FIG. 8, the first electrical power supply circuit 12a and the second electrical power supply circuit 12b are connected via the connection circuit 18a. The DC electrical power output from the second electrical power generating device 14b is supplied to the first load device 16a via the second electrical power supply circuit 12b, the connection circuit 18a, and the first electrical power supply circuit 12a. As a result, the output of the electric motors 50 and 54 of the first load device 16a is prevented from excessively decreasing due to the decrease in the output voltage of the first electrical power storage device 24a. Depending on the conditions, the DC electrical power output from the second electrical power generating device 14b may be charged to the first electrical power storage device 24a.

The reactors 23a are connected in series to the connection device 20a. When the supply of electrical power from the second electrical power supply circuit 12b to the first electrical power supply circuit 12a is started by switching to the first connection control, a counter-electromotive force is generated in the reactors 23a, and therefore the peak value of the inrush current flowing from the second electrical power supply circuit 12b to the first electrical power supply circuit 12a is suppressed to be low. Therefore, damage to the first load device 16a or the first electrical power storage device 24a can be suppressed.

Further, since the DC electrical power output from the second electrical power generating device 14b is supplied to the first load device 16a, the load of the first electrical power storage device 24a is reduced, and therefore, the decrease in the output voltage and SOC of the first electrical power storage device 24a is suppressed. In this case, since no electrical power is supplied from the second electrical power generating device 14b to the second load device 16b, only the DC electrical power output from the second electrical power storage device 24b is supplied to the second load device 16b. Therefore, the output voltage and SOC of the second electrical power storage device 24b are likely to be lowered. Thereafter, the process transitions to step S5.

In step S5, the control device 34 executes a second connection control on the connection device 20b. In accordance with this control, as shown in FIG. 8, the third electrical power supply circuit 12c and the fourth electrical power supply circuit 12d are connected via the connection circuit 18b. The DC electrical power output from the second electrical power generating device 14b is supplied to the third load device 16c via the fourth electrical power supply circuit 12d, the connection circuit 18b, and the third electrical power supply circuit 12c. As a result, the output of the electric motors 50 and 54 of the third load device 16c is prevented from excessively decreasing due to the decrease in the output voltage of the third electrical power storage device 24c. Depending on the conditions, the DC electrical power output from the second electrical power generating device 14b may be charged to the third electrical power storage device 24c.

The reactors 23b are connected in series to the connection device 20b. When the supply of electrical power from the fourth electrical power supply circuit 12d to the third electrical power supply circuit 12c is started by switching to the second connection control, a counter-electromotive force is generated in the reactors 23b, and therefore the peak value of the inrush current flowing from the fourth electrical power supply circuit 12d to the third electrical power supply circuit 12c is suppressed to be low. Therefore, damage to the third load device 16c or the third electrical power storage device 24c can be suppressed.

Further, since the DC electrical power output from the second electrical power generating device 14b is supplied to the third load device 16c, the load of the third electrical power storage device 24c is reduced, and therefore, the decrease in the output voltage and SOC of the third electrical power storage device 24c is suppressed. In this case, since no electrical power is supplied from the second electrical power generating device 14b to the fourth load device 16d, only the DC electrical power output from the fourth electrical power storage device 24d is supplied to the fourth load device 16d. Therefore, the output voltage and SOC of the fourth electrical power storage device 24d are likely to be lowered. When the output voltages (SOC) of the first electrical power storage device 24a, the second electrical power storage device 24b, the third electrical power storage device 24c, and the fourth electrical power storage device 24d are equal to each other, the electrical power output from the second electrical power generating device 14b is supplied to each of the first load device 16a, the second load device 16b, the third load device 16c, and the fourth load device 16d. It is noted that step S5 may be performed at the same time as step S4 or before step S4. After steps S4 and S5, the process transitions to step S6.

In step S6, the control device 34 determines whether or not the difference between the output voltage of the first electrical power storage device 24a and the output voltage of the second electrical power storage device 24b is equal to or less than a predetermined voltage threshold value. In the case it is determined that the difference between the output voltage of the first electrical power storage device 24a and the output voltage of the second electrical power storage device 24b is greater than the voltage threshold value (NO in step S6), the process of step S6 is repeated. In the case it is determined that the difference between the output voltage of the first electrical power storage device 24a and the output voltage of the second electrical power storage device 24b is equal to or less than the voltage threshold value (YES in step S6), the process transitions to step S7.

In step S7, the control device 34 determines whether or not the difference between the output voltage of the third electrical power storage device 24c and the output voltage of the fourth electrical power storage device 24d is equal to or less than a predetermined voltage threshold value. In the case it is determined that the difference between the output voltage of the third electrical power storage device 24c and the output voltage of the fourth electrical power storage device 24d is greater than the voltage threshold value (NO in step S7), the process of step S7 is repeated. In the case it is determined that the difference between the output voltage of the third electrical power storage device 24c and the output voltage of the fourth electrical power storage device 24d is equal to or less than the voltage threshold value (YES in step S7), the process transitions to step S8.

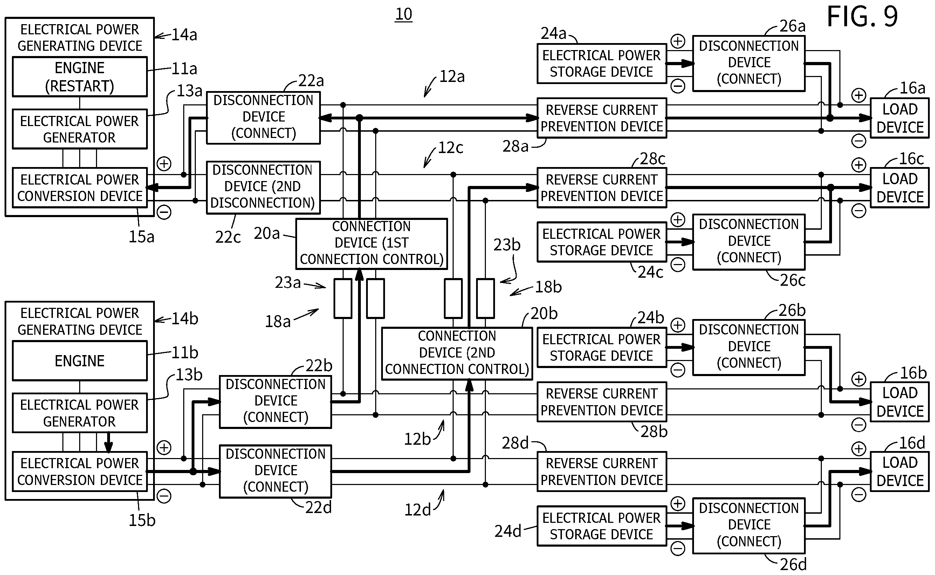

In step S8, the control device 34 cancels the first disconnection. As a result, as shown in FIG. 9, the DC electrical power output from the second electrical power generating device 14b is supplied to the first electrical power conversion device 15a via the second electrical power supply circuit 12b, the connection circuit 18a, and the first electrical power supply circuit 12a. As a result, the smoothing capacitor 21 of the first electrical power conversion device 15a is charged. Further, when the current flowing through the connection circuit 18a increases by canceling the first disconnection, a counter-electromotive force is generated in the reactors 23a, so that the peak value of the inrush current flowing from the first electrical power supply circuit 12a to the first electrical power conversion device 15a is suppressed to be low. Therefore, damage to the first electrical power conversion device 15a can be suppressed. In step S8, the DC electrical power output from the second electrical power generating device 14b can be supplied to the first load device 16a. Thereafter, the process transitions to step S9.

In step S9, the control device 34 executes a restoration control for restoring the first electrical power generating device 14a. Specifically, the control device 34 controls the first electrical power conversion device 15a to restart the first engine 11a by the electrical power charged in the smoothing capacitor 21 of the first electrical power conversion device 15a. Thereafter, the process transitions to step S10.

In step S10, the control device 34 determines whether or not the restoration of the first electrical power generating device 14a has been completed. In other words, the control device 34 determines whether or not the first engine 11a has restarted. In the case it is determined that the restoration of the first electrical power generating device 14a is not completed (NO in step S10), the process of step S10 is repeated. In the case it is determined that the restoration of the first electrical power generating device 14a is completed (YES in step S10), the process transitions to step S11.

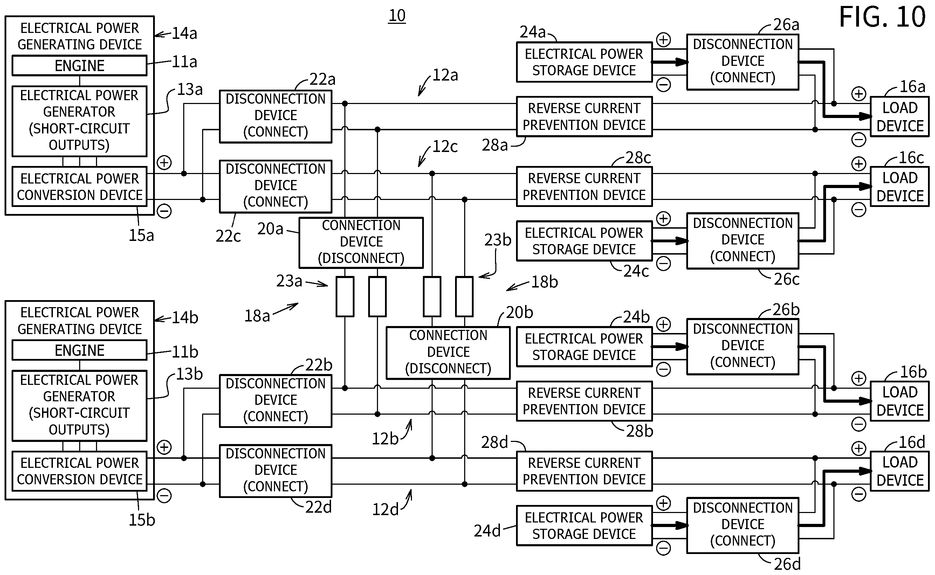

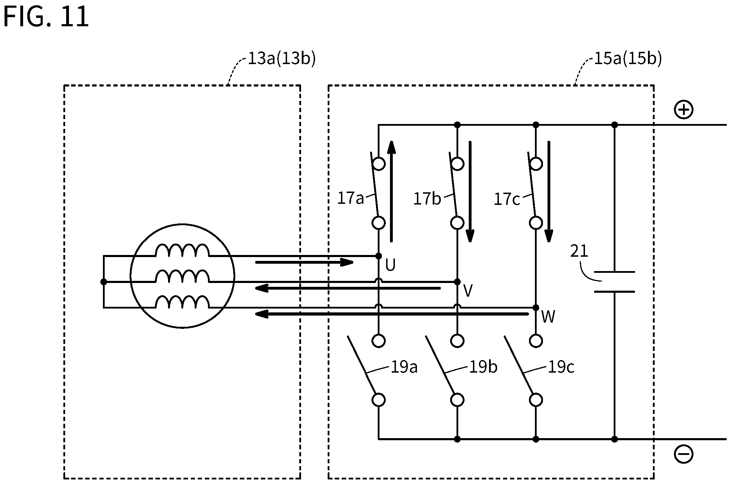

In step S11, the control device 34 short-circuits the outputs of the first electrical power generator 13a and the second electrical power generator 13b (see FIG. 10). FIG. 11 is a diagram illustrating a state in which the outputs of the first electrical power generator 13a are short-circuited. As shown in FIG. 11, in the case that the outputs of the first electrical power generator 13a are short-circuited, each of the switching elements 17a to 17c of the upper arm is turned on (connected state). The phase of the voltage of the U-phase, the phase of the voltage of the V-phase, and the phase of the voltage of the W-phase of the first electrical power generator 13a are shifted by 120 degrees, respectively. By short-circuiting the outputs of the first electrical power generator 13a, the U-phase voltage, the V-phase voltage, and the W-phase voltage cancel out each other, and the output voltage of the first electrical power generator 13a can be made zero.

In the case that the outputs of the first electrical power generator 13a are short-circuited, each of the switching elements 19a to 19c of the lower arm may be turned on (connected state). In the case that each of the switching elements 19a to 19c of the lower arm is turned on (connected state), the output voltage of the first electrical power generator 13a can be made zero.

The outputs of the second electrical power generator 13b can be short-circuited by controlling the second electrical power generating device 14b in the same manner as the first electrical power generating device 14a. Thereafter, the process transitions to step S12.

In step S12, the control device 34 controls the connection device 20a to disconnect the first electrical power supply circuit 12a from the second electrical power supply circuit 12b, and controls the connection device 20b to disconnect the third electrical power supply circuit 12c from the fourth electrical power supply circuit 12d. As shown in FIG. 10, in this case, the connection devices 20a and 20b can be disconnected in a state where the current flowing through the connection devices 20a and 20b is suppressed. In this case, it is possible to suppress the generation of arcs from the connection devices 20a and 20b at the time of disconnection. This makes it possible to make the contactors of the connection devices 20a and 20b relatively small in capacity, and thus to make the connection devices 20a and 20b small in size and light in weight. Thereafter, the process transitions to step S13.

In step S13, the control device 34 cancels the short circuit of the outputs of the first electrical power generator 13a and the second electrical power generator 13b. As a result, the electrical power supply system 10 returns to the control in the normal operation. Thereafter, the process of FIG. 6 is completed.

In the above-described method of controlling the electrical power supply system 10, the case that the first electrical power generating device 14a is restored in the case of misfire of the first engine 11a has been described as an example, but the same control can be executed in the case of misfire of the second engine 11b. In the method of controlling the electrical power supply system 10, the control during the ascending of the moving object 44 is described as an example, but the same control can be executed during the taking off (hovering), cruising, descending, and landing of the moving object 44. Furthermore, in the case that it is determined that a failure has occurred in the supply of electric power from the first electrical power generating device 14a to the first electrical power supply circuit 12a (YES in step S1), and it is determined that the failure is a misfire of the first engine 11a after the processes of steps S2 and S3 are performed, the process may proceed to the processes of steps S4 and S5.

According to the present embodiment, the connection circuit 18a includes reactors 23a connected in series to the connection device 20a. In this case, since a counter-electromotive force is generated in each of the reactors 23a when the first connection control is executed for the connection device 20a, the peak value of the inrush current flowing in the first electrical power supply circuit 12a or the second electrical power supply circuit 12b is suppressed to be low. In accordance with this feature, damage to the electronic devices (for example, the first load device 16a or the second load device 16b) provided in the first electrical power supply circuit 12a or the second electrical power supply circuit 12b can be suppressed. In the case that a failure has occurred in the supply of electrical power from the first electrical power generating device 14a to the first electrical power supply circuit 12a, electrical power can be supplied from the second electrical power supply circuit 12b to the first load device 16a via the connection circuit 18a and the first electrical power supply circuit 12a by executing the first connection control on the connection device 20a. Furthermore, since the first connection control is executed in a state in which the first electrical power supply circuit 12a and the connection circuit 18a are disconnected from the first electrical power generating device 14a by the disconnection device 22a, it is possible to prevent the inrush current from flowing to the first electrical power generating device 14a. Therefore, damage of the first electrical power generating device 14a due to the inrush current can be suppressed. Further, for example, in the case that the failure in the supply of electric power from the first electrical power generating device 14a to the first electrical power supply circuit 12a is a short circuit, it is possible to prevent further failures in the electrical power supply system 10, such as failures in the second electrical power generating device 14b and the like. Accordingly, it is possible to provide the more satisfactory electrical power supply system 10, the more satisfactory moving object 44, and the method of more satisfactorily controlling such an electrical power supply system 10.

The electrical power supply system 10 according to the present embodiment is not limited to the configuration described above. In the electrical power supply system 10, for example, the third electrical power supply circuit 12c, the fourth electrical power supply circuit 12d, and the connection circuit 18b may be omitted. In this case, the third load device 16c and the like provided in the third electrical power supply circuit 12c and the fourth load device 16d and the like provided in the fourth electrical power supply circuit 12d are also omitted.

The following supplementary notes are further disclosed in relation to the above-described embodiments.

### Supplementary Note 1

The electrical power supply system (10) according to the present disclosure includes the first electrical power supply circuit (12a) configured to supply to the first load device (16a) the electrical power output from the first electrical power generating device (14a), the electrical power being the direct current electrical power, the second electrical power supply circuit (12b) configured to supply to the second load device (16b) the electrical power output from the second electrical power generating device (14b), the electrical power being the direct current electrical power, the connection circuit (18a) equipped with the connection device (20a) configured to connect the first electrical power supply circuit and the second electrical power supply circuit to each other, and the control device (34) configured to execute the connection control on the connection device in order to connect the first electrical power supply circuit and the second electrical power supply circuit to each other via the connection circuit, and the disconnection device (22a) configured to disconnect the first electrical power generating device from the first electrical power supply circuit and the connection circuit, wherein the connection circuit is further equipped with the reactor (23a) configured to be connected in series to the connection device, and in the case that the failure has occurred in supply of the electrical power from the first electrical power generating device to the first electrical power supply circuit, the control device executes the connection control on the connection device in the state in which the first electrical power supply circuit and the connection circuit are disconnected from the first electrical power generating device by the disconnection device.

In accordance with such a configuration, the connection circuit includes the reactor connected in series to the connection device. In this case, since a counter-electromotive force is generated in the reactor when the connection control is executed on the connection device, the peak value of the inrush current flowing in the first electrical power supply circuit or the second electrical power supply circuit is suppressed to be low. Accordingly, damage to the electronic devices (for example, the first load device or the second load device) provided in the first electrical power supply circuit or the second electrical power supply circuit can be suppressed. Further, in the case that a failure has occurred in the supply of electrical power from the first electrical power generating device to the first electrical power supply circuit, electrical power can be supplied from the second electrical power supply circuit to the first load device via the connection circuit and the first electrical power supply circuit by executing the connection control on the connection device. Furthermore, since the connection control is executed in a state in which the first electrical power supply circuit and the connection circuit are disconnected from the first electrical power generating device by the disconnection device, it is possible to prevent the inrush current from flowing to the first electrical power generating device. Therefore, damage of the first electrical power generating device due to the inrush current can be suppressed. Further, for example, in the case that the failure in the supply of electric power from the first electrical power generating device to the first electrical power supply circuit is a short circuit, it is possible to prevent further failures in the electrical power supply system, such as failures in the second electrical power generating device and the like. Accordingly, a more satisfactory electrical power supply system can be provided.

### Supplementary Note 2

In the electrical power supply system according to Supplementary Note 1, by canceling disconnection by the disconnection device after the connection control is executed on the connection device, the control device may supply electrical power from the second electrical power supply circuit to the first electrical power generating device to execute a restoration control on the first electrical power generating device in order to restore the first electrical power generating device.

In accordance with such a configuration, the first electrical power generating device can be restored by the electrical power supplied from the second electrical power supply circuit.

### Supplementary Note 3

In the electrical power supply system according to Supplementary Note 2, in the case that the first electrical power generating device is restored by the restoration control, the control device may control the connection device to disconnect the first electrical power supply circuit from the second electrical power supply circuit.

In accordance with such a configuration, the connection between the first electrical power supply circuit and the second electrical power supply circuit can be disconnected after the first electrical power generating device restores. Thus, in the case that an overcurrent occurs in one of the first electrical power supply circuit or the second electrical power supply circuit, it is possible to prevent the overcurrent from flowing into the other.

### Supplementary Note 4

In the power supply system described in Supplementary Note 3, the first electrical power generating device may include the first electrical power generator (13a) configured to output the three-phase alternating current electrical power, and the first electrical power conversion device (15a) configured to convert the three-phase alternating current electrical power output from the first electrical power generator into the direct current electrical power, the second electrical power generating device may include the second electrical power generator (13b) configured to output the three-phase alternating current electrical power, and the second electrical power conversion device (15b) configured to convert the three-phase alternating current electrical power output from the second electrical power generator into the direct current electrical power, and in the case that the first electrical power generating device is restored by the restoration control, the control device controls the connection device to disconnect the first electrical power supply circuit from the second electrical power supply circuit, in the state in which outputs of the first electrical power generator and the second electrical power generator are short-circuited.

In accordance with such a configuration, the first electrical power supply circuit can be disconnected from the second electrical power supply circuit by the connection device in a state in which the output voltage of each of the first electrical power generating device and the second electrical power generating device is suppressed. In this case, it is possible to suppress the generation of arcs from the connection device at the time of disconnection. Therefore, the connection device can be made small in size and light in weight.

### Supplementary Note 5

The electrical power supply system according to any one of Supplementary Notes 2 to 4 may further include the first electrical power storage device (24a) configured to be connected to the first electrical power supply circuit and in parallel with the first electrical power generating device, and the second electrical power storage device (24b) configured to be connected to the second electrical power supply circuit and in parallel with the second electrical power generating device, wherein the control device may cancel the disconnection by the disconnection device and execute the restoration control, after the difference between the output voltage of the first electrical power storage device and the output voltage of the second electrical power storage device becomes equal to or less than the predetermined voltage threshold value in the state that the connection control is executed on the connection device.

In accordance with such a configuration, in the case that the supply of electrical power from the first electrical power generating device to the first electrical power supply circuit is cut off, the electrical power supplied from the second electrical power supply circuit to the first electrical power supply circuit via the connection circuit can be supplied to the first load device or the first electrical power storage device in a preferential manner. As a result, it is possible to suppress the shortage of electrical power supplied to the first load device due to the decrease in output voltage (SOC) of the first electrical power storage device.

### Supplementary Note 6

The moving object (44) according to the present disclosure includes the electrical power supply system according to any one of Supplementary Notes 1 to 5.

In accordance with such a configuration, a more satisfactory movable body can be obtained.

### Supplementary Note 7

In the method of controlling the electrical power supply system according to the present disclosure, the electrical power supply system includes the first electrical power supply circuit configured to supply to the first load device the electrical power output from the first electrical power generating device, the electrical power being the direct current electrical power, the second electrical power supply circuit configured to supply to the second load device the electrical power output from the second electrical power generating device, the electrical power being the direct current electrical power, the connection circuit equipped with the connection device configured to connect the first electrical power supply circuit and the second electrical power supply circuit to each other, and the disconnection device configured to disconnect the first electrical power generating device from the first electrical power supply circuit and the connection circuit, the connection circuit being further equipped with the reactor configured to be connected in series to the connection device, and the method includes in the case that the failure has occurred in supply of the electrical power from the first electrical power generating device to the first electrical power supply circuit, executing the connection control on the connection device in order to connect the first electrical power supply circuit and the second electrical power supply circuit to each other via the connection circuit in the state in which the first electrical power supply circuit and the connection circuit are disconnected from the first electrical power generating device by the disconnection device.

In accordance with such a method, a better method of controlling the electrical power supply system can be obtained.

## Claims

1. An electrical power supply system (10) comprising:
a first electrical power supply circuit (12a) configured to supply to a first load device (16a) an electrical power output from a first electrical power generating device (14a), the electrical power being a direct current electrical power;
a second electrical power supply circuit (12b) configured to supply to a second load device (16b) an electrical power output from a second electrical power generating device (14b), the electrical power being a direct current electrical power;
a connection circuit (18a) equipped with a connection device (20a) configured to connect the first electrical power supply circuit and the second electrical power supply circuit to each other; and
a control device (34) configured to execute a connection control on the connection device in order to connect the first electrical power supply circuit and the second electrical power supply circuit to each other via the connection circuit; and
a disconnection device (22a) configured to disconnect the first electrical power generating device from the first electrical power supply circuit and the connection circuit,
wherein the connection circuit is further equipped with a reactor (23a) configured to be connected in series to the connection device, and
in a case that a failure has occurred in supply of the electrical power from the first electrical power generating device to the first electrical power supply circuit, the control device executes the connection control on the connection device in a state in which the first electrical power supply circuit and the connection circuit are disconnected from the first electrical power generating device by the disconnection device.

2. The electrical power supply system according to claim 1, wherein by canceling disconnection by the disconnection device after the connection control is executed on the connection device, the control device supplies electrical power from the second electrical power supply circuit to the first electrical power generating device to execute a restoration control on the first electrical power generating device in order to restore the first electrical power generating device.

3. The electrical power supply system according to claim 2, wherein in a case that the first electrical power generating device is restored by the restoration control, the control device controls the connection device to disconnect the first electrical power supply circuit from the second electrical power supply circuit.

4. The electrical power supply system according to claim 3, wherein the first electrical power generating device includes a first electrical power generator (13a) configured to output a three-phase alternating current electrical power, and a first electrical power conversion device (15a) configured to convert the three-phase alternating current electrical power output from the first electrical power generator into the direct current electrical power,
the second electrical power generating device includes a second electrical power generator (13b) configured to output a three-phase alternating current electrical power, and a second electrical power conversion device (15b) configured to convert the three-phase alternating current electrical power output from the second electrical power generator into the direct current electrical power, and
in the case that the first electrical power generating device is restored by the restoration control, the control device controls the connection device to disconnect the first electrical power supply circuit from the second electrical power supply circuit, in a state in which outputs of the first electrical power generator and the second electrical power generator are short-circuited.

5. The electrical power supply system according to any one of claims 2 to 4, further comprising:
a first electrical power storage device (24a) configured to be connected to the first electrical power supply circuit and in parallel with the first electrical power generating device; and
a second electrical power storage device (24b) configured to be connected to the second electrical power supply circuit and in parallel with the second electrical power generating device,
wherein the control device cancels the disconnection by the disconnection device and executes the restoration control, after a difference between an output voltage of the first electrical power storage device and an output voltage of the second electrical power storage device becomes equal to or less than a predetermined voltage threshold value in a state that the connection control is executed on the connection device.

6. A moving object (44) comprising the electrical power supply system according to any one of claims 1 to 5.

7. A method of controlling an electrical power supply system, the electrical power supply system including:
a first electrical power supply circuit configured to supply to a first load device an electrical power output from a first electrical power generating device, the electrical power being a direct current electrical power;
a second electrical power supply circuit configured to supply to a second load device an electrical power output from a second electrical power generating device, the electrical power being a direct current electrical power;
a connection circuit equipped with a connection device configured to connect the first electrical power supply circuit and the second electrical power supply circuit to each other; and
a disconnection device configured to disconnect the first electrical power generating device from the first electrical power supply circuit and the connection circuit,
the connection circuit being further equipped with a reactor configured to be connected in series to the connection device,
the method comprising:
in a case that a failure has occurred in supply of the electrical power from the first electrical power generating device to the first electrical power supply circuit, executing a connection control on the connection device in order to connect the first electrical power supply circuit and the second electrical power supply circuit to each other via the connection circuit in a state in which the first electrical power supply circuit and the connection circuit are disconnected from the first electrical power generating device by the disconnection device.
